# EUROPÄISCHE PATENTSCHRIFT

(11) **EP 3 909 413 B1**
(45) Veröffentlichungstag und Bekanntmachung des Hinweises auf die Patenterteilung: **09.12.2026**
(21) Anmeldenummer: 20174629.4
(22) Anmeldetag: 14.05.2020
(51) Int. Cl.: A01D 34/53

(54) **MÄH- ODER MULCHVORRICHTUNG BZW. SCHNEIDWERKZEUG FÜR EINE SOLCHE**
MOWING OR MULCHING DEVICE AND CUTTING TOOL FOR SAME
DISPOSITIF DE FAUCHE OU DE BROYAGE OU OUTIL DE COUPE POUR UN TEL DISPOSITIF

(43) Veröffentlichungstag der Anmeldung: 17.11.2021
(73) Patentinhaber: Maschinenfabrik Bermatingen GmbH & Co. KG, 88697 Bermatingen (DE)
(72) Erfinder: Schautzgy, Maximilian, 88697 Bermatingen (DE); Okur, Nihat, 88437 Maselheim (DE); Lehmann, Franz, 88677 Markdorf (DE); Gotterbarm, Roderich, 88697 Bermatingen (DE)
(74) Vertreter: Christ, Niko

(56) Entgegenhaltungen:
- EP-A1- 0 151 217
- EP-A2- 0 443 079
- DE-A1- 3 635 925
- DE-U1- 20 109 393
- GB-A- 2 136 664

## Beschreibung

Die Erfindung bezieht sich auf eine Mähvorrichtung nach dem Oberbegriff des Patentanspruchs 1.

Eine derartige Mähvorrichtung ist beispielsweise aus der EP 3 162 183 A1 bekannt geworden. Die von einem Untergrund abstehende Vegetation soll von einer vorgegebenen Schnitthöhe und Schnittbreite abgetrennt werden. Zu diesem Zweck sind an einem fahrbaren Traggestell mindestens zwei an dem Traggestell drehbar abgestützte Schneidwerkzeuge angebracht, die parallel zu dem Untergrund in einer einstellbaren Höhenposition angeordnet sind. Die Rotationsachse der Schneidwerkzeuge verläuft dabei senkrecht zu dem Untergrund, denn die Schneidwerkzeuge rotieren parallel zu dem Untergrund, um die Vegetation abzuschneiden. Aus der EP 0 443 079 A2 ist eine Mähvorrichtung gemäß dem Oberbegriff des Anspruchs 1 bekannt.

Es ist auch bekannt, an dem fahrbaren Traggestell Schneidwerkzeuge anzubringen, deren Rotationsachse parallel und beabstandet zu dem Untergrund ausgerichtet sind. Dabei verläuft an dem Schneidwerkzeug eine spiralförmige Schnittkante, die folglich mit der von dem Untergrund abstehenden Vegetation in Wirkkontakt gelangt und diese abschneidet.

Solche Schneidwerkzeuge für Mäh- oder Mulchvorrichtungen haben sich in der Praxis zwar bewährt, weisen jedoch den Nachteil auf, dass insbesondere bei spiralförmig umlaufenden Schnittkanten das abgeschnittene Vegetationsgut in eine vorgegebene Transportrichtung gefördert ist. Sobald die Schnittkante im Bereich des Traggestells endet, können in diesem Abschnitt die abgeschnittenen Vegetationsreste zu Verstopfungen oder sonstigen Beschädigungen an dem Schneidwerkzeug führen, denn die Vegetationsreste lagern sich zwischen der als Welle ausgestalteten Schneidwerkzeug und dem Inneren des Traggestells ab.

Solche Verunreinigungen oder Verstopfungen, die zu erheblichen Ablagerungsrückständen führen können, behindern demnach den Mähvorgang. Zudem sind diese Verunreinigungen zu lösen, sodass entsprechende Reinigungsarbeiten nach dem jeweiligen Arbeitsvorgang notwendig sind.

Es ist daher Aufgabe der Erfindung, eine Mäh- oder Mulchvorrichtung bzw. ein Schneidwerkzeug für eine solche der eingangs genannten Gattungen vorzusehen, durch die ein definierter Abtransport der abgeschnittenen Vegetation in eine vorgegebene Ablagerungsposition erfolgt, die von dem Traggestell beabstandet ist. Dabei soll das abgeschnittene Vegetationsgut möglichst im Inneren des Traggestells anfallen, sodass dieses von dem Übergangsbereich zwischen dem Schneidwerkzeuge und dem Traggestell ferngehalten ist.

Diese Aufgabe ist erfindungsgemäß durch die Merkmale des kennzeichnen Teils von Patentanspruch 1 für die Mähvorrichtung gelöst.

Weitere vorteilhafte Weiterbildungen der Erfindung ergeben sich aus den Unteransprüchen.

Dadurch, dass an dem Schneidwerkzeug mindestens zwei spiralförmig verlaufende Schnittkanten angeformt oder vorgesehen sind, dessen jeweilige Gewindesteigungen gegenläufig zueinander ausgestaltet sind, ist erreicht, dass die abgeschnittenen Vegetationen aufgrund der vorgegebenen gegenläufigen Gewindesteigungen der Schnittkanten in das Innere des Traggestell abtransportiert sind und somit nicht in dem Übergangsbereich zwischen dem Schneidwerkzeug und dem Traggestell anfallen und sich dort ablagern.

Vorteilhafterweise werden die abgeschnittenen Vegetationen gleichmäßig in die Mitte des Traggestells gefördert und bilden dort einen einfach aufzunehmenden Haufen auf dem Untergrund oder können mittels einer Förder- oder Saugeinrichtung aufgefangen und in einem Auffangbehälter abtransportiert werden. Folglich gelangen die abgeschnittenen Vegetationen in einen definierten Bereich auf den Untergrund oder können unmittelbar abtransportiert werden.

Insbesondere wenn die Vegetation aus einem relativ festen Material, beispielsweise Holz, bestehen sollte, ist es erforderlich, dass die abgeschnittenen Vegetationen einfach und kostengünstig abtransportiert werden können, um den Untergrund für nachfolgende Vegetationen freigänglich zu machen.

Aufgrund der betragsmäßigen identischen und gegenläufigen Ausrichtung der Gewindesteigungen der jeweiligen Schnittkante werden die abgeschnittenen Vegetationen in entgegengesetzte Richtungen, also aufeinander zu, bewegt und gelangen folglich nicht mehr in den Übergangsbereich zwischen dem Schneidwerkzeug und dem Traggestell. Die jeweilige Schnittkante wirkt demnach als eine Art Förderschnecke für die abgeschnittenen Vegetationen.

In der Zeichnung ist ein erfindungsgemäßes Ausführungsbeispiel dargestellt, das nachfolgend näher erläutert ist. Im Einzelnen zeigt:
- Figur 1: eine Mäh- oder Mulchvorrichtung, mit einem verfahrbaren Traggestell, an dem ein Schneidwerkzeug angeordnet ist, dessen Rotationsachse parallel zu einem Untergrund verläuft, in Seitenansicht und
- Figur 2: das Schneidwerkzeug gemäß Figur 1, mit zwei spiralförmig verlaufenden und gegenläufig angeordne- ten Schnittkanten, als vergrößerter Ausschnitt, von hinten.

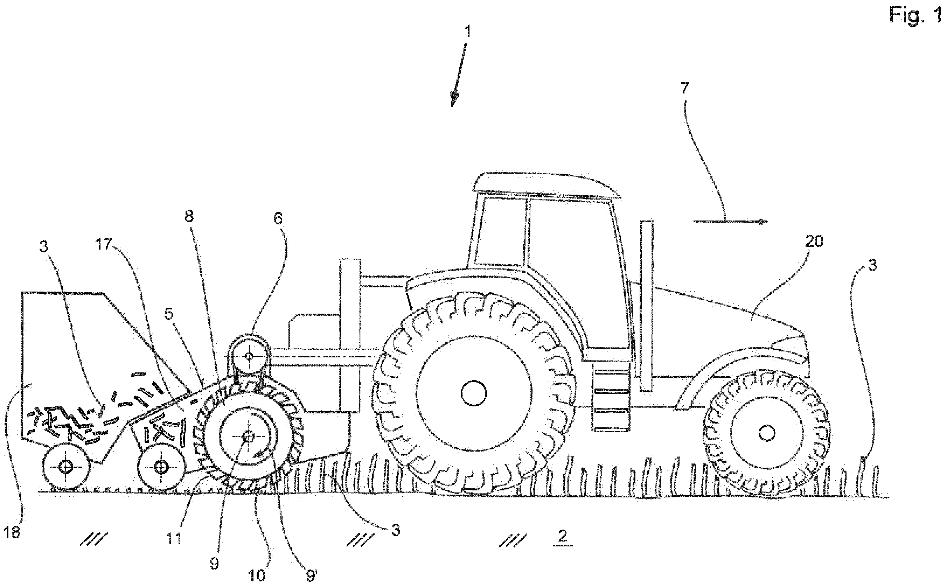

In Figur 1 ist eine Mäh- oder Mulchvorrichtung 1 abgebildet, durch die eine von einem Untergrund 2 abstehende Vegetationen 3 abzuschneiden ist. An einer als Traktor ausgestalteten schematischen Zugeinrichtung 20 ist ein Traggestell 5 vorgesehen, in dem ein als Welle ausgestaltetes Schneidwerkzeug 8 rotierbar gelagert ist. Mithilfe eines Motors 6 und eines Getriebes 4 wird das Schneidwerkzeug 8 unabhängig von der Fahrgeschwindigkeit des Traktors 20 in Rotation versetzt. Dieses rotiert im Uhrzeigersinn. Die von der Zugeinrichtung 20 vorgegebene Bewegungsrichtung ist mit der Bezugsziffer 7 gekennzeichnet. Somit rotiert das Schneidwerkzeug 8 in Richtung der Bewegungsrichtung 7, also in einer mit der Bezugsziffer 9' gekennzeichneten Rotationsrichtung. Durch den Traktor 20 ist folglich das Traggestell 5 über den Untergrund 2 gezogen und somit relativ zu diesem verfahrbar.

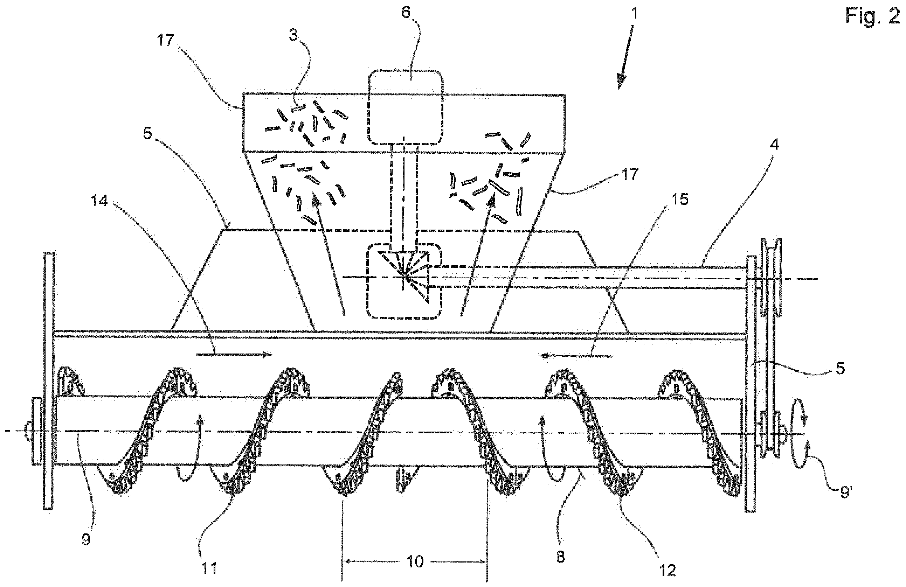

Aus Figur 2 ist ersichtlich, dass an dem Schneidwerkzeug 8 zwei Schnittkanten 11 und 12 vorgesehen sind, deren Gewindesteigungen betragsmäßig identisch sind. Die Schnittkanten 11 und 12 verlaufen spiralförmig entlang der Mantelfläche des Schneidwerkzeuges 8 und treffen in dessen Mitte zusammen. Die Rotationsachse 9 des Schneidwerkzeugs 8 verläuft demnach parallel zu dem Untergrund 2 und bildet den geometrischen Mittelpunkt für die beiden Schnittkanten 11 und 12, deren Abstand zu der Rotationsachse 9 identisch ist.

Das Schneidwerkzeug 8 ist in dem Traggestell 5 angeordnet, sodass das Schneidwerkzeug 8 teilweise von den Traggestell 5 ummantelt ist. Um einen Wirkkontakt zwischen der jeweiligen Schnittkante 11 bzw. 12 und der von dem Untergrund 2 abstehenden Vegetation 3 zu ermöglichen, ist das Traggestell 5 in Bewegungsrichtung 7 offen. Zwischen dem Untergrund 2 und dem Schneidwerkzeug 8 ist ein Luftspalt vorgesehen, sodass die abgeschnittene Vegetation 3 aufgrund der vorherrschenden Erdanziehungskraft auf den Untergrund 2 fällt.

Da die Gewindesteigungen der Schnittkanten 11 und 12 gegenläufig zueinander ausgerichtet sind, entsteht eine gegensätzliche Transportbewegung 14, denn die abgeschnittenen Vegetationen 3 werden aufgrund der Rotation des Schneidwerkzeugs 8 in die Mitte des Schneidwerkzeugs 8 nach Art eines Schneckenförderers transportiert. Diese beiden Bewegungsrichtungen sind schematisch eingezeichnet und mit der Bezugsziffer 14 gekennzeichnet.

Der Übergangsbereich zwischen den beiden gegenläufigen Schnittkanten 11 und 12 ist mit der Bezugsziffer 16 versehen. In dem Übergangsbereich 16 gelangen demnach die abgeschnittenen Vegetationen 3 und können entweder in Form eines Haufens auf den Untergrund 2 abgelegt werden oder mithilfe einer Förder- oder Saugeinrichtung 17 aufgefangen und in einen der Zugeinrichtung 20 zugeordneten Auffangbehälter 18 abtransportiert sein.

Aufgrund der Ausrichtung der spiralförmigen und gegenläufig ausgerichteten Schnittkanten 11 und 12 gelangen abgeschnittene Vegetationen 3 nicht in den Übergangsbereich zwischen dem Traggestell 5 und im Schneidwerkzeug 8, sodass in diesem Bereich die Vegetationen 3 keine Verstopfung oder sonstige Ablagerungen entstehen lassen.

In dem gezeigten Ausführungsbeispiel sind die beiden Schnittkanten 11 und 12 mit einer betragsmäßig identischen Gewindesteigung ausgestaltet. Es können allerdings beliebige gegenläufige Gewindesteigungen für die Schnittkanten 11, 12 vorgesehen sein.

Zudem sind die Schnittkanten 11, 12 derart an der Mantelfläche des Schneidwerkzeugs 8 angebracht, dass diese exakt in der Längenmitte des Schneidwerkzeug 8 aufeinandertreffen.

Jeder der Schnittkanten 11, 12 weist demnach eine Länge L auf, die der Hälfte der Länge L des Schneidwerkzeugs 8 entspricht.

### BEZUGSZEICHENLISTE

- 1: Mäh-Vorrichtung
- 2: Untergrund
- 3: Pflanzen / Vegetation
- 4: Getriebe
- 5: Traggestell
- 6: Motor
- 7: Bewegungsrichtung
- 8: Schneidwerkzeug
- 9: Rotationsachse v. 8
- 9': Rotationsrichtung v. 8
- 10: Schnittfläche
- 11, 12: 1. Schnittkante
- 13₁-13ₙ: Abschnitte v. 8
- 14: Transportvorrichtung v. 11
- 15: Transportvorrichtung v. 12
- 16: Übergangsbereich
- 17: Förder-- oder Saugeinrichtung
- 18: Auffangbehälter
- 20: Zugeinrichtung

## Patentansprüche

1. Mähvorrichtung (1), durch die von einem Untergrund (2) abstehende Vegetation (3) abzuschneiden ist, bestehend aus:
- einem in eine Bewegungsrichtung (7) verfahrbaren Traggestell (5),
- mindestens ein an dem Traggestell (5) drehbar abgestütztes Schneidwerkzeug (8), dessen Rotationsachse (9) parallel zu dem Untergrund (2) in einer einstellbaren Höhenposition angeordnet ist und durch die die Vegetation (3) jeweils in einer vorgegebene Schnitthöhe (10) abgeschnitten ist, und
- mindestens einen Motor (6), durch den das jeweilige Schneidwerkzeug (8) in Rotation versetzt ist,
wobei an dem Schneidwerkzeug (8) mindestens zwei spiralförmig verlaufende Schnittkanten (11, 12) angeformt oder vorgesehen sind, dessen jeweilige Gewindesteigungen gegenläufig zueinander ausgestaltet sind und eine gegensätzliche Transportbewegung (14, 15) der abgeschnittenen Vegetation (3) erzeugen,
**dadurch gekennzeichnet, dass** das Schneidwerkzeug (8) in Richtung der Bewegungsrichtung (7) der Zugeinrichtung (20) rotiert, wobei die abgeschnittene Vegetation (3) zunächst mithilfe der spiralförmig verlaufenden Schnittkanten (11, 12) in einen Übergangsbereich (16) gelangen und dort mithilfe einer Förder- oder Saugeinrichtung (17) aufgefangen und in einen der Zugeinrichtung (20) in Bewegungsrichtung (7) folgenden Auffangbehälter (18) abtransportiert ist.

2. Mähvorrichtung nach Anspruch 1, **dadurch gekennzeichnet, dass** die Länge (L) des Schneidwerkzeuges (8) in Abschnitte (13₁, 13₂ ...13ₙ) unterteilt ist, in denen jeweils eine der gegenläufigen Schnittkanten (11 oder 12) angeordnet ist.

3. Mähvorrichtung nach einem der vorhergehenden Ansprüche, **dadurch gekennzeichnet, dass** die gegenläufigen Schnittkanten (11, 12) eine betragsmäßig identische Gewindesteigung aufweisen.

## Claims

1. A mowing device (1) for cutting vegetation (3) projecting from a ground surface (2), comprising:
• a support frame (5) movable in a direction of movement (7),
• at least one cutting tool (8) rotatably supported on the support frame (5), the axis of rotation (9) of which is arranged parallel to the ground surface (2) at an adjustable height position and by means of which the vegetation (3) is cut at a respective predetermined cutting height (10), and
• at least one motor (6) by means of which the respective cutting tool (8) is caused to rotate,
wherein at least two helically extending cutting edges (11, 12) are integrally formed on or provided on the cutting tool (8), the respective thread pitches of which are configured in opposite directions relative to one another and generate opposing conveying movements (14, 15) of the cut vegetation (3),
**characterized in that** the cutting tool (8) rotates in the direction of movement (7) of the traction unit (20), wherein the cut vegetation (3) initially reaches a transition region (16) by means of the helically extending cutting edges (11, 12), is collected there by means of a conveying or suction device (17), and is transported into a collecting container (18) following the traction unit (20) in the direction of movement (7).

2. The mowing device according to claim 1, **characterised in that** the length (L) of the cutting tool (8) is divided into sections (131, 132 ... 13n), in each of which one of the oppositely directed cutting edges (11 or 12) is arranged.

3. The mowing device according to any one of the preceding claims, **characterised in that** the oppositely directed cutting edges (11, 12) have thread pitches that are identical in magnitude.

## Revendications

1. Dispositif de tonte (1) destiné à couper une végétation (3) faisant saillie depuis un sol (2), comprenant :
• un châssis porteur (5) déplaçable dans une direction de déplacement (7),
• au moins un outil de coupe (8) supporté de manière rotative sur le châssis porteur (5), dont l'axe de rotation (9) est disposé parallèlement au sol (2) dans une position en hauteur réglable et au moyen duquel la végétation (3) est respectivement coupée à une hauteur de coupe prédéterminée (10), et
• au moins un moteur (6) au moyen duquel l'outil de coupe respectif (8) est mis en rotation,
dans lequel au moins deux arêtes de coupe hélicoïdales (11, 12) sont formées d'une seule pièce sur l'outil de coupe (8) ou prévues sur celuici, dont les pas de vis respectifs sont configurés en sens opposés l'un par rapport à l'autre et génèrent des mouvements de transport opposés (14, 15) de la végétation coupée (3),
**caractérisé en ce que** l'outil de coupe (8) tourne dans la direction de déplacement (7) de l'unité de traction (20), la végétation coupée (3) parvenant d'abord dans une zone de transition (16) à l'aide des arêtes de coupe hélicoïdales (11, 12), y étant recueillie à l'aide d'un dispositif de transport ou d'aspiration (17), puis transportée dans un récipient collecteur (18) qui suit l'unité de traction (20) dans la direction de déplacement (7).

2. Dispositif de tonte selon la revendication 1, **caractérisé en ce que** la longueur (L) de l'outil de coupe (8) est subdivisée en sections (131, 132 ... 13n), dans chacune desquelles est disposée l'une des arêtes de coupe opposées (11 ou 12).

3. Dispositif de tonte selon l'une quelconque des revendications précédentes, **caractérisé en ce que** les arêtes de coupe opposées (11, 12) présentent des pas de vis identiques en valeur absolue.
